# EUROPEAN PATENT APPLICATION

(11) **EP 4 756 933 A1**
(43) Date of publication of application: **10.06.2026**
(21) Application number: 24878836.6
(22) Date of filing: 29.09.2024
(51) Int. Cl.: H01M 4/62, C09J 11/08

(54) **SELF-REPAIRING BINDER FOR BATTERY AND PREPARATION METHOD THEREFOR**

(30) Priority: 16.10.2023 CN 202311330239
(71) Applicant: REPT BATTERO Energy Co., Ltd., Wenzhou, Zhejiang 325000 (CN); Shanghai Ruipu Energy Co., Ltd., Shanghai 201206 (CN)
(72) Inventor: CAO, Hui, Wenzhou, Zhejiang 325000 (CN); SHAO, Xuexiang, Shanghai 201206 (CN); HOU, Min, Shanghai 201206 (CN); LI, Tingting, Shanghai 201206 (CN); ZHAO, Lingyu, Shanghai 201206 (CN); JIANG, Hongyu, Wenzhou, Zhejiang 325000 (CN); LIU, Chan, Shanghai 201206 (CN)
(74) Representative: Vitina, Maruta
(86) International application number: PCT/CN2024/122310
(87) International publication number: WO 2025/082191

(57) **Abstract**

A self-repair binder for batteries and its preparation method, which consists of binder, additives, solvent, and self-repair agent. The self-repair agent includes polymer microcapsules, which consist of capsule wall material and repair liquid core material. Additives act as thickeners to improve the viscosity and flowability of the binder, making it easier to apply and coat on the battery surface. The self-repair agent can be encapsulated by polymer microcapsules, allowing it to automatically release the repair binder when the battery suffers minor damage, thus achieving self-repair functionality. Additionally, the repair binder has excellent interfacial bonding with both the binder and the active materials of the cathode and anode, ensuring long-term repair effectiveness.

## Description

### TECHNICAL FIELD

The present invention belongs to the field of binders, and specifically involves a self-repair binder for batteries and its preparation method.

### BACKGROUND TECHNOLOGY

The basic components of a secondary battery include the cathode, anode, electrolyte, and separator. The active materials of the cathode and anode serve as carriers for the insertion and extraction of cations. During charging, cations are released from the cathode material, and move through the ion conductor in the electrolyte to the anode material, where they are embedded, storing electrical energy in the battery; during discharging, cations are released from the anode material, and move through the ion conductor in the electrolyte to the cathode material, where they are embedded, releasing electrical energy from the battery.

As the widespread application of secondary batteries and the increase in market demand, higher requirements have been placed on battery performance and safety. The main technical challenges currently include: increasing the energy density and capacity density of batteries; enhancing the rate and efficiency of cation insertion and extraction; improving the cycle life and safety of batteries; and reducing battery costs. To address these issues, researchers and companies in the field of secondary batteries are continuously innovating technologically and improving engineering, launching a series of new products and technologies that are both innovative and practical. Among these, the impact of binders in battery safety and cycle life research is becoming increasingly significant. They effectively connect the active materials of the cathode and anode with conductive agents and current collectors, ensuring the stability and consistency of internal battery components.

However, existing battery anode binders are typically prepared from styrene-butadiene rubber (SBR). While these binders exhibit excellent stability and mechanical strength in high-temperature and chemical corrosion environments, they have several issues and drawbacks. First, these binders tend to peel and crack during the charge-discharge cycles of battery components, increasing contact resistance and affecting battery performance and cycle life. Second, they lack flexibility, leading to stress concentration that can cause cracks and fractures, impacting the mechanical strength and stability of the battery. Additionally, these binders often require high-temperature baking for curing, which increases manufacturing costs and time for battery components. Furthermore, traditional binders can loosen and peel during charging and discharging, compromising battery safety and causing serious issues such as short circuits and fires.

There has been considerable research and development on secondary battery binders, including the following existing technologies: (1) Thermosetting polymer binders: These binders exhibit excellent stability and mechanical strength in high-temperature and chemical corrosive environments, but they tend to peel and crack during charge-discharge cycles. (2) Polyurethane binders: These binders have good thermal resistance and mechanical properties, but they are prone to stress concentration and cracking. (3) Silicone rubber binders: These binders offer excellent flexibility and adhesion, but their mechanical strength is relatively low.

In general, there is no ideal secondary battery binder available in the existing technology that can maintain stability and mechanical strength under various conditions such as high temperature, chemical corrosion and charge-discharge cycles, and has good flexibility and self-repair ability. Therefore, more research and development are needed in this field to solve these problems.

### SUMMARY OF THE PRESENT INVENTION

The purpose of the present invention is to address the problems existing in current technology and provide a self-repair binder for batteries and its preparation method. This self-repair binder has self-repair properties, allowing it to repair itself when damage occurs during battery use, effectively enhancing the service life and safety performance of the battery.

The object of the present invention can be achieved by the following scheme:
The present invention provides a self-repair binder for batteries, including the following components: binder, additive, solvent, self-repair agent;
The self-repair agent comprises a polymer microcapsule, which comprises a capsule wall material and a repair liquid core material;
The repair liquid core material includes the repair solvent and the repair binder.

After using the self-repair binder in battery electrodes, when subsequent expansion of the electrode (for example, during the use of lithium-ion batteries, the expansion of the electrode can occur due to lithium deintercalation and intercalation) leads to aging and damage of the binder, the polymer microcapsules in the self-repair agent will rupture, releasing the repair binder inside (this part of the repair binder, stored within the polymer microcapsules, will not age or suffer damage), thus repairing the damaged area.

As one embodiment of the present invention, the parts by weight of each component are as follows:

| | |
|---|---|
| binder | 60-80 parts by weight; |
| additive | 10-20 parts by weight; |
| solvent | 10-15 parts by weight; |
| self-repair agent | 10-15 parts by weight. |

If the content of self-repair agent is too low, it will affect the self-repair effect; if the content of self-repair agent is too high, it may affect the initial bonding effect of self-repair binder.

In the present invention, the binder, additives, and solvent can all be commonly used substances in existing technology. Specifically, for example, the binder includes one or more of polyacrylic acid, acrylic ester copolymers, polyamides, acrylic ester-acrylamide copolymers, and polyurethanes; the additives include one or more of polyphosphate ester, polyvinyl alcohol, carboxymethyl cellulose, and polyacrylamide, preferably a combination of 5-10 parts by weight of polyphosphate ester and 5-10 parts by weight of polyvinyl alcohol (relative to 10-15 parts by weight of self-repair agent); the components of the solvent include one or more of water, N-methylpyrrolidone (NMP), diethylenetriamine (DETA), and dimethylformamide (DMF).

As one embodiment of the present invention, the mass ratio of the capsule wall material to the repair liquid core material in the polymer microcapsule is (1-5):(2-8). Specifically, for example, 1:8, 1:2, 3:4, 5:8, 5:2. The capsule wall material includes one or more of epoxy resin, polystyrene, polybutadiene, polypropylene, and polymethylene polyphenyl polyisocyanate.

As one embodiment of the present invention, the repair binder includes one or more of polyacrylic acid, acrylic ester copolymer, polyamide, acrylic ester-acrylamide copolymer, or polyurethane. That is, the repair binder can be the same as the aforementioned binders and can form polymer microcapsules with the capsule wall material; the repair solvent includes water and organic solvents, where the organic solvents include one or more of N-methylpyrrolidone (NMP), diethylenetriamine (DETA), N,N-dimethylformamide (DMF), methanol, ethanol, xylene, toluene, or acetone. The polyurethane used as the repair binder can be thermoplastic polyurethane elastomer (TPU). The mass ratio of water to organic solvent in the repair solvent can be 1:1 to 1:9, for example, 5:5, 6:4, 7:3, 8:2, or 1:9. Furthermore, the components of the repair liquid core material may also include one or more of repair additives, which can be polyphosphate ester, polyvinyl alcohol, carboxymethyl cellulose, or polyacrylamide.

As one embodiment of the present invention, the particle size of the polymer microcapsules is 30-300nm, for example, 50nm, 100nm, 150nm, 200nm, or 250nm. If the particle size of the polymer microcapsules is too large, it will cause them to settle, making it impossible to form a stable binder system. If the particle size is too small, the repair effect will be insignificant.

As one embodiment of the present invention, the self-repair agent is a polymer microcapsule.

As one embodiment of the present invention, the polymer microcapsule consists of a capsule wall material and a repair liquid core material.

The present invention also provides a preparation method of self-repair binder for batteries, including the following steps:
At room temperature, the additive is dissolved in the solvent, and then the binder and self-repair agent are added after stirring to fully emulsify and obtain a stable emulsion; thus, the self-repair binder for battery is obtained.

The preferred additive is 5-10 parts by weight of polyphosphate ester and 5-10 parts by weight of polyvinyl alcohol (relative to 10-15 parts by weight of self-repair agent).

The stirring speed was 100-120r/min and the time was 30-40min. Emulsification was carried out at the speed of 500-3000r/min.

As an embodiment of the present invention, the preparation method of the self-repair agent includes the following steps:
The emulsifier is dissolved in water and stirred to obtain an emulsifier solution; the capsule wall material and repair binder are added to the emulsifier solution, and then the repair solvent is added drop by drop. After emulsification, the temperature is increased and the reaction continues, so as to obtain a self-repair agent including the polymer microcapsules.

Optionally, the emulsifier is sodium dodecylbenzenesulfonate and polyvinylpyrrolidone (PVP). The mass fraction of sodium dodecylbenzenesulfonate in the emulsifier solution is 0.5%-1%, and the mass fraction of PVP is 0.1%-0.5%. This results in a particle size of 30-300nm for the resulting polymer microcapsule self-repair agent.

In this preparation step, the dosage ratio of water, capsule wall material components, repair binder in the repair liquid core material, and repair solvent in the repair liquid core material is 100ml:1-5g:2-8g:10-100ml. The emulsification time is 3-10min. The temperature for heating reaction is 55-60°C, and the time is 3-4h.

As one embodiment of the present invention, the binder is preferably polyurethane. When preparing the self-repair binder, the additives are dissolved in a solvent, followed by adding the polyester polyol and polyurethane precursor used for synthesizing polyurethane along with the self-repair agent to form a stable emulsion. After heating and vacuuming to continue the reaction, adjust the pH value and perform defoaming treatment to obtain the self-repair binder for batteries.

During the heating process, the rotational speed is adjusted to 500-600r/min, and the temperature is raised to 55-60°C, with a reaction time of 3-4h. The pH value is adjusted to 6-7 using NH4Cl water solution and HCl water solution. After adjusting the pH value, defoamer is added, specifically 1-2 drops of siloxane defoamer. The stirring speed during defoaming is 10-100r/min, and the duration is 20-60min. The mass ratio of polyester polyol to polyurethane precursor is (40-50):(20-30). The polyester polyol includes one or more of poly(ethyl acrylate), polycaprolactone alcohol, polypropylene glycol, and poly(butylene terephthalate); the polyurethane precursor includes one or more of polymethylene polyphenyl polyisocyanate, polyisocyanate, and methyl diisocyanate. Preferably, poly(butylene terephthalate) and polyisocyanate are used as the polyester polyol and polyurethane precursor to synthesize the polyurethane binder; alternatively, the polyurethane binder can be directly added, but the binder synthesized from the polyurethane precursor has better compatibility with polymer microcapsules.

As a specific embodiment of the present invention, the preparation method specifically includes the following steps:
S1: Preparation of the self-repair agent: At room temperature, dissolve the emulsifier (sodium dodecylbenzenesulfonate at 0.5% by mass and PVP at 0.1% by mass) in 100mL of water, stirring at 1000r/min for 30min. Slowly add 1-5g of polymethylene polyphenyl polyisocyanate and 2-8g of thermoplastic polyurethane elastomer (TPU). Continue to slowly add a 100mL mixture of NMP and water (mass ratio 1:10). After continuing emulsification for 3min, heat to 55°C and react for 3h. Stop the reaction, cool and let stand, then wash with deionized water 5-7 times. Dry at room temperature for 24h to obtain the self-repair agent containing polymer microcapsules.
S2: Preparation of self-repair binder: At room temperature, weigh 5-10g of polyphosphate ester and 5-10g of polyvinyl alcohol, dissolve them in 15mL of water at a stirring speed of 100r/min for 30min. Then add 40-50g of poly(butylene terephthalate), 20-30g of polyisocyanate, and 10-15g of self-repair agent, fully emulsify at a speed of 1000r/min to obtain a stable emulsion. After thorough mixing, adjust the stirring speed to 500r/min and increase the temperature to 55°C. Under vacuum, continue the reaction for 3h. After the reaction is complete, add 0.1mol/L of NH₄Cl aqueous solution and 1mol/L of HCl aqueous solution to adjust the pH to between 6-7, then add 1-2 drops of silicone defoamer and stir at low speed for 30min to obtain the desired self-repair binder.

Compared with the existing technology, the present invention has the following beneficial effects:
(1) Under normal use, the binder in the self-repair binder for the battery serves to bond the battery electrode, and the additive can improve the viscosity and fluidity of the binder, so that it is easier to coat and cover the battery surface.
(2) The self-repair agent can be encapsulated within the capsule wall material, enabling it to automatically release the repair liquid core material when the battery suffers minor damage. This means that during use, if the electrodes expand and cause binder damage, this will also lead to the rupture of the capsule wall material containing polymer microcapsules in the self-repair agent, releasing the repair binder from the core material. Upon contact with the damaged area, the repair binder will adhere and repair the damage, forming a protective layer to mend the damage.
(3) The aforementioned protective layer not only maintains the integrity of lithium-ion battery electrodes but also features rapid self-repair. The formation of the protective layer can be completed in a very short time (several seconds to a few minutes). Additionally, the protective layer has excellent interfacial bonding with binders and the active materials of the battery's cathode and anode, ensuring long-term repair effectiveness.

### ILLUSTRATIVE DRAWINGS

Other features, purposes and advantages of the present invention will become more apparent from a detailed description of the non-limiting embodiments in conjunction with the accompanying drawings:
Figure 1 is the battery cycle curve corresponding to Example 1, Example 4 and Comparative Example 5;
Figure 2 is an electron microscope image of the self-repair agent prepared in Example 1;
Figure 3 is the electron microscope image of the self-repair binder prepared in Example 1 in the electrode.

### DETAILED DESCRIPTION

The following is a detailed description of the present invention in conjunction with the accompanying drawings and specific embodiments. The examples provided below are implemented under the technical solution of the present invention, offering detailed implementation methods and specific operational processes that will help technical personnel in this field to further understand the present invention. It should be noted that the scope of protection of the present invention is not limited to the embodiments described below; any adjustments and improvements made under the premise of the concept of the present invention also fall within the scope of protection of the present invention.

The grades and sources of some raw materials used in the examples and comparative examples are as follows:

| Material | Grade | Supplier Name |
|---|---|---|
| PVP | K30 | Aowei Chemical Co., Ltd. |
| Polymethylene polyphenyl polyisocyanate | P875392 | Nantong Runfeng Petrochemical Co., Ltd. |
| TPU | 1080A | Zhejiang Huafeng Thermoplastic Polyurethane Co., Ltd. |
| Polyphosphate ester | MOA-3P | Hangzhou Qianyang Technology Co., Ltd. |
| Polyvinyl alcohol | 1788 | Shanghai Petrochemical Co., Ltd. |
| Poly(butylene terephthalate) | 2550 | Basf AG |
| SBR | 3001 | Aiyulong Trading (Shanghai) Co., Ltd. |

### Example 1

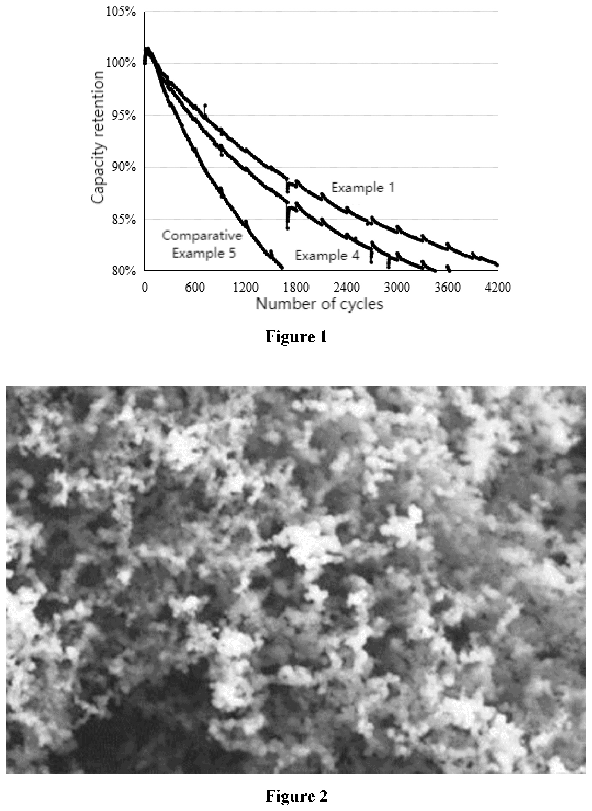

This embodiment provides a preparation method of self-repair binder for batteries, including the following steps:
S1: At room temperature, dissolve sodium dodecylbenzenesulfonate and PVP in 100mL of water to obtain an emulsifier solution with a sodium dodecylbenzenesulfonate mass fraction of 0.5% and a PVP mass fraction of 0.1%. Stir at 1000r/min for 30min. Slowly add 1.5g of polymethylene polyphenyl polyisocyanate and 2.0g of TPU, then slowly drop 100mL of NMP-water mixture (NMP to water mass ratio 1:10). Continue emulsifying for 3min, then heat to 55°C and react for another 3h. Stop the reaction, cool and let stand, wash 6 times with deionized water, dry at room temperature for 24h, and obtain the self-repair agent containing polymer microcapsules with a particle size of 32.5nm. The polymer microcapsules are the self-repair agent. The electron microscope image of the self-repair agent is shown in Figure 2.
S2: At room temperature, weigh 5g of polyphosphoric ester and 5g of polyvinyl alcohol, dissolve them in 15mL of water, stir at 100r/min for 30min. Then add 40g of poly(butylene terephthalate), 20g of polyisocyanate, and 10g of the self-repair agent prepared in step S1, fully emulsify at 1000r/min to obtain a stable emulsion. After mixing evenly, adjust the stirring speed to 500r/min, increase the temperature to 55°C, and continue the reaction for 3h under vacuum. After the reaction is complete, add 0.1mol/L of NH₄Cl aqueous solution and 1mol/L of HCl aqueous solution to adjust the pH to 6.5, add 2 drops of silicone defoamer, and stir at low speed for 30min to obtain the required self-repair binder.

### Example 2

This embodiment provides a preparation method of self-repair binder for batteries, including the following steps:
S1: At room temperature, dissolve sodium dodecylbenzenesulfonate and PVP in 100mL of water to obtain an emulsifier solution with a sodium dodecylbenzenesulfonate mass fraction of 1.0% and a PVP mass fraction of 0.5%. Stir at 1000r/min for 30min. Slowly add 1.5g of polymethylene polyphenyl polyisocyanate and 2.0g of TPU, and slowly add a 100mL mixture of NMP and water (NMP to water mass ratio 1:10). Continue emulsifying for 3min, then heat to 55°C and react for another 3h. Stop the reaction, cool and let stand. Wash 6 times with deionized water, dry at room temperature for 24h, and obtain a self-repair agent containing polymer microcapsules with a particle size of 285.4nm. The polymer microcapsules are the self-repair agent.
S2 is the same as Example 1.

### Example 3

This embodiment provides a preparation method of self-repair binder for lithium ion battery, including the following steps:
S1: At room temperature, dissolve sodium dodecylbenzenesulfonate and PVP in 100mL of water to obtain an emulsifier solution with a sodium dodecylbenzenesulfonate mass fraction of 0.5% and a PVP mass fraction of 0.1%. Stir at 1000r/min for 30min. Slowly add 1.5g of epoxy resin and 2.0g of polyurethane, continue emulsifying for 3min. Then slowly add a 50mL mixture of NMP and water (NMP to water mass ratio 1:10), continue emulsifying for another 3min. Increase the temperature to 55°C and continue reacting for 3h. Stop the reaction, cool and let stand, wash with deionized water 6 times, dry at room temperature for 24h, and obtain a self-repair agent containing polymer microcapsules with a particle size 50.6nm. The polymer microcapsules are the self-repair agent.
S2 is the same as Example 1.

### Example 4

This embodiment provides a preparation method of self-repair binder for lithium ion battery, including the following steps:
S1: At room temperature, weigh 5g of polyphosphate ester and 5g of polyvinyl alcohol, dissolve them in 15mL of water, stir at 100r/min for 30min, then add 40g of poly(butylene terephthalate) and 20g of polyisocyanate, fully emulsify at 1000r/min, to obtain a stable emulsion. After stirring evenly, adjust the stirring speed to 500r/min, increase the temperature to 55°C, and continue the reaction under vacuum for 3h. After the reaction is complete, add 0.1mol/L of NH₄Cl aqueous solution and 1mol/L of HCl aqueous solution to adjust the pH to 6.5, add 2 drops of silicone defoamer, and stir at low speed for 30min to obtain a binder without self-repair agent.

### Comparative Example 1

In this example, the mass fraction of emulsifier was adjusted to 0.5% sodium dodecylbenzenesulfonate and the mass fraction of PVP was 0.0% (1a), 0.25% (1b), 0.50% (1c) and 0.70% (1d). The other steps were the same as Example 1.

### Comparative Example 2

In this example, the mass fraction of emulsifier was adjusted to 1.5% sodium dodecylbenzenesulfonate and the mass fraction of PVP was 0.0% (2a), 0.25% (2b), 0.50% (2c) and 0.70% (2d). The other steps were the same as Example 1.

### Comparative Example 3

In this example, the mass fraction of emulsifier was adjusted to 3% sodium dodecylbenzenesulfonate, and the mass fraction of PVP was 0.0% (3a), 0.25% (3b), 0.50% (3c) and 0.70% (3d). The other steps were the same as Example 1.

### Comparative Example 4

In this example, the mass fraction of emulsifier was adjusted to 6% sodium dodecylbenzenesulfonate and the mass fraction of PVP was 0.0% (4a), 0.25% (4b), 0.50% (4c) and 0.70% (4d). The other steps were the same as Example 1.

### Comparative Example 5

This comparative example is SBR binder with solid content of 48%.

The particle size of polymer microcapsules was tested by GB/T 19077-2016 Particle size analysis-Laser diffraction method. Test instrument: Malvern 5000. Test results are shown in Table 1.

**Table 1: Particle size of polymer microcapsules**

| | Example 1 | Example 2 | Example 3 | |
|---|---|---|---|---|
| particle size /nm | 32.5 | 285.4 | 50.6 | |
| | Comparative Example 1a | Comparative Example 1b | Comparative Example 1c | Comparative Example 1d |
| particle size /nm | No shell | 108.5 | 203.2 | 352.6 |
| | Comparative Example 2a | Comparative Example 2b | Comparative Example 2c | Comparative Example 2d |
| particle size /nm | No shell | 320.4 | 420.3 | demulsification |
| | Comparative Example 3a | Comparative Example 3b | Comparative Example 3c | Compare 3d |
| particle size /nm | No shell | 380.2 | demulsification | demulsification |
| | Comparative Example 4a | Comparative Example 4b | Comparative Example 4c | Comparative Example 4d |
| particle size /nm | No shell | demulsification | demulsification | demulsification |

Analysis of the particle size results of polymer microcapsules prepared using examples 1-2 and comparative examples 1-4: The proportion of emulsifier has a significant impact on the final particle size of the polymer microcapsules. Preferably, the mass fraction of the emulsifier is as follows: in the emulsifier solution, the mass fraction of sodium dodecylbenzenesulfonate is 0.5%-1%, and the mass fraction of PVP is 0.1%-0.5%. A too high proportion can result in oversized particles or demulsification, while a too low proportion can lead to failure to form a shell.

The self-repair agents prepared from Examples 1, 2, and 3, as well as the binder prepared from Example 4, were added to epoxy resin (Sumitomo, EME-G600) at a concentration of 5wt% (i.e., the mass ratio of self-repair agent or binder to epoxy resin is 5:95). The mechanical properties of the resin material after adding the self-repair agent or binder were evaluated using a tensile testing machine. The results are shown in Table 2.

**Table 2: Mechanical properties of epoxy resin materials containing self-repair agents or binders**

| | Max load /N | Tensile strength /MPa | Elongation /% | Yield stress /MPa | Young's Modulus /MPa |
|---|---|---|---|---|---|
| Example 1 | 815 | 35.4 | 4.26 | 23 | 685 |
| Example 2 | 835 | 40.1 | 3.83 | 30.18 | 724.5 |
| Example 3 | 627 | 15.3 | 2.45 | 5.38 | 516.5 |
| Example 4 | 793 | 30.5 | 4.16 | 20.58 | 632.5 |

Self-repair agents prepared from different capsule wall materials and different repair binders can have varying effects on the mechanical properties of resins. As shown in Table 2: self-repair agents prepared with polymethylene polyphenyl polyisocyanate as the capsule wall material and TPU as the repair binder can endow epoxy resins with better mechanical properties.

### Electrode and battery performance test

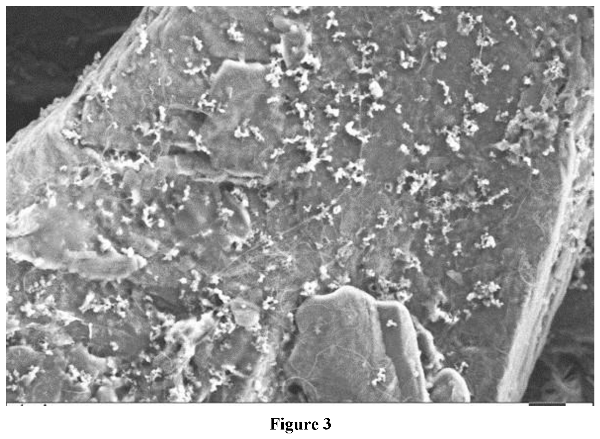

1. The self-repair binder prepared in Example 1, the binder without a repair agent prepared in Example 4, and the SBR binder of Comparative Example 5 were added to a mixing tank along with graphite (Anhui Keda New Materials Co., Ltd., KD-1), conductive carbon black (SP), and sodium carboxymethyl cellulose (CMC-Na) in a weight ratio of 1.5:95:2:1.5 for kneading and stirring. High-speed dispersion was performed to prepare the anode slurry, which was then used to fabricate the anode using an extrusion coating machine. The electrode has a surface density of 75g/m² and a compaction density of 1.65g/cm³. The electron microscope image of the anode made from the self-repair binder prepared in Example 1 is shown in Figure 3.
2. Lithium iron phosphate cathode material (Hunan Yunneng New Energy Battery Materials Co., Ltd., CN-5), polyvinylidene fluoride (PVDF), and SP are added to the mixing tank in a weight ratio of 96:2.0:2.0, and the cathode slurry is obtained. The slurry is then coated and rolled to prepare the cathode. The surface density is 200g/m², and the compaction density is 2.45g/cm3.
3. The anodes prepared from each embodiment and the comparative example were assembled with the cathode, polyethylene separator, and electrolyte according to conventional methods to form the corresponding batteries for each embodiment and the comparative example. The electrolyte consists of ethylene carbonate (EC), ethyl methyl carbonate (EMC), and diethyl carbonate (DEC) in a volume ratio of 1:1:1 as the solvent, with 1mol/L lithium hexafluorophosphate (LiPF₆) as the lithium salt.

### Performance test of each anode:

Flexibility test of electrode: Fold the electrode several times, observe whether there are microcracks on the surface, and record the number of folds until there are microcracks.

Electrode peel strength test: Cut the electrode into a sample strip with a length * width of 2000mm * 24mm, and evenly apply the 24mm wide 3M tape on the anode. Use universal tensile machine to carry out 180° tensile peel test, and the peel speed is 20mm/min.

Electrode resistance test: The electrode is peeled off from the surface of aluminum foil with insulating tape, and the electrode resistance is tested with a four-probe test device. The electrode through-resistance is tested with a through-resistance tester.

The test results are shown in Table 3.

**Table 3: Performance of electrode**

| Item | Example 1 | Example 4 | Comparative Example 5 |
|---|---|---|---|
| Flexibility of the electrode/ times | 12 | 10 | 5 |
| Electrode through-resistance / mΩ | 6.2 | 5.2 | 8.0 |
| Electrode sheet resistance / (mΩ/m) | 18.1 | 15.8 | 30.4 |
| Electrode peeling strength / (N/m) | 48 | 45 | 20 |

It can be seen from the data of Example 1 and Example 4 as well as Comparative Example 5 that compared with SBS binder, the self-repair binder in the present invention has better flexibility, lower resistance value of the electrode and better adhesion of the electrode.

Perform performance tests on each battery:
Cycle capacity and DCR test steps: at room temperature (25°C), hold for 5min, discharge at 1/3C constant current for 90min, rest 60min, discharge at 1C constant current for 30s, rest 5min, charge at 1C constant current to 3.65V, 3.65V constant voltage until 0.05C, rest 5min, discharge at 1C constant current to 2.0V, rest 10min; charge at 0.5C constant current to 3.65V, 3.65V constant voltage until 0.05C, rest 5min.

The test results are shown in Table 4.

**Table 4: Electrical performance test results**

| Item | Example 1 | Example 4 | Comparative Example 5 |
|---|---|---|---|
| Equivalent number of cycles for 80% capacity retention | 4200 | 3600 | 1790 |
| 0-300 cycles DCR/mΩ | 6.82 | 7.13 | 15.54 |
| 300-600 cycles DCR/mΩ | 6.94 | 7.22 | 15.66 |
| 600-1000 cycles DCR/mΩ | 7.18 | 7.48 | 15.75 |
| Initial electrode thickness/µm | 152 | 152 | 152 |
| Electrode thickness at the end of cycle/µm | 156 | 162 | 180 |

By comparing Example 1 and Example 4 as well as Comparative Example 5, it can be seen that, as shown in Figure 1, the self-repair binder of the present invention has better cycle capacity retention rate and DCR growth after cycle than the conventional binder system.

The above describes specific embodiments of the present invention. It should be understood that the present invention is not limited to the specific embodiments described above, and those skilled in the art can make various modifications or variations within the scope of the claims, which do not affect the essential content of the present invention.

## Claims

1. A self-repair binder for batteries, **characterized in that** it comprises the following components: binder, additive, solvent, self-repair agent;
The self-repair agent comprises a polymer microcapsule, which comprises a capsule wall material and a repair liquid core material;
The repair liquid core material includes a repair solvent and a repair binder, the repair binder including one or more of polyacrylic acid, acrylic ester copolymer, polyamide, acrylic ester-acrylamide copolymer, and polyurethane;
The binder comprises one or more of polyacrylic acid, acrylic ester copolymer, polyamide, acrylic ester-acrylamide copolymer, and polyurethane.

2. The self-repair binder for batteries according to claim 1, **characterized in that** the parts by weight of each component are:
| | |
|---|---|
| binder | 60-80 parts by weight; |
| additive | 10-20 parts by weight; |
| solvent | 10-15 parts by weight; |
| self-repair agent | 10-15 parts by weight. |

3. The self-repair binder for batteries according to claim 1, **characterized in that** the capsule wall material comprises one or more of epoxy resin, polystyrene, polybutadiene, polypropylene and polymethylene polyphenyl polyisocyanate.

4. The self-repair binder for batteries according to claim 1, **characterized in that** the particle size of the polymer microcapsule is 30-300nm.

5. A method for preparing a self-repair binder for batteries according to claim 1, **characterized in that** it comprises the following steps:
At room temperature, the additive is dissolved in the solvent, and then the binder and self-repair agent are added after stirring, fully emulsified to obtain a stable emulsion, which is the self-repair binder for the battery.

6. The preparation method according to claim 5, **characterized in that** the preparation method of the self-repair agent comprises the following steps: dissolving the emulsifier in water and stirring to form an emulsion solution; adding the capsule wall material and repair binder to the emulsion solution, then adding the repair solvent, followed by emulsification, heating, and continued reaction, thereby obtaining the self-repair agent.

7. The preparation method according to claim 6, **characterized in that** the emulsifier is sodium dodecylbenzenesulfonate and PVP, wherein the mass fraction of sodium dodecylbenzenesulfonate in the emulsifier solution is 0.5%-1%, and the mass fraction of PVP is 0.1%-0.5%.

8. The preparation method according to claim 5, **characterized in that** when the binder is polyurethane, the preparation method of the self-repair binder is as follows: dissolve the additive in a solvent, then add the polyester polyol and polyurethane precursor used for synthesizing polyurethane along with the self-repair agent simultaneously to form a stable emulsion; after heating, evacuate and continue the reaction; adjust the pH value, and perform defoaming, thus obtaining the self-repair binder for batteries.

9. The preparation method according to claim 8, **characterized in that** the polyester polyol comprises one or more of poly(ethyl acrylate), polycaprolactone alcohol, polypropylene glycol, and poly(butylene terephthalate); the polyurethane precursor comprises one or more of polymethylene polyphenyl polyisocyanate, polyisocyanate, and methyl diisocyanate.
